# EUROPÄISCHE PATENTSCHRIFT

(11) **EP 4 559 967 B1**
(45) Veröffentlichungstag und Bekanntmachung des Hinweises auf die Patenterteilung: **06.05.2026**
(21) Anmeldenummer: 23211890.1
(22) Anmeldetag: 24.11.2023
(51) Int. Cl.: C08L 21/00, B60C 1/00, C08K 3/36, C08K 5/548

(54) **KAUTSCHUKMISCHUNGEN ENTHALTEND MINDESTENS EIN PROZESSHILFSMITTEL DER FORMEL (I)**
RUBBER MIXTURES CONTAINING AT LEAST ONE PROCESS AID OF FORMULA (I)
COMPOSITIONS DE CAOUTCHOUC CONTENANT AU MOINS UN ADJUVANT DE TRAITEMENT DE FORMULE (I)

(43) Veröffentlichungstag der Anmeldung: 28.05.2025
(73) Patentinhaber: LANXESS Deutschland GmbH, 50569 Köln (DE)
(72) Erfinder: Ziser, Torsten, 69488 Birkenau (DE); Müller, Helmut, 97359 Schwarzach am Main (DE); Müller-Niehuus, Kristian, 60438 Frankfurt (DE)

(56) Entgegenhaltungen:
- EP-A1- 4 067 112
- EP-A1- 4 079 538
- DE-A1- 102021 205 543

## Beschreibung

Die Erfindung betrifft Kautschukmischungen, enthaltend je mindestens einen Kautschuk, mindestens einen hydroxylgruppenhaltigen oxidischen Füllstoff, mindestens ein Verstärkungsadditiv aus der Reihe der schwefelhaltigen organischen Silane, mindestens einen Vernetzer aus der Reihe Schwefel und Schwefelspender und mindestens ein Prozesshilfsmittel der Formel (I), deren Herstellung und Verwendung, sowie die dadurch erhältlichen Vulkanisate nach dem Vulkanisationsverfahren, insbesondere in Form von Reifen, Teilen von Reifen oder technischen Gummiartikeln.

Eine große Herausforderung in der Entwicklung von Reifengummimischungen ist die Verbesserung des Zielkonfliktes zwischen Rollwiderstand, Nassbremsen und Abrieb. Um anwendungsrelevante Eigenschaften von Vulkanisaten wie Reifen erhalten aus Kautschukmischungen, wie z. B. den erwähnten Zielkonflikt, zu optimieren, werden den Kautschukmischungen immer größere Mengen an Silika und Verstärkungsadditiven zugesetzt. Dies hat aber zur Folge, dass die Viskositäten der Vulkanisate stark ansteigen, was den Einsatz von effizienten Prozesshilfsmitteln erforderlich macht.

In WO2010136345A1 wurden funktionalisierte Kautschuke zusammen mit einer Trimethylolpropan (TMP)-Fettsäure-Mischung in Kautschukmischungen eingesetzt, um den Rollwiderstand und die Nassrutschfestigkeit zu verbessern. TMP ist jedoch mittlerweile als reprotoxisch Kategorie 2 eingestuft worden. Deshalb besteht ein großer Bedarf daran, toxikologisch weniger bedenkliche Ersatzstoffe für TMP zu finden, die eine vergleichbare Performance wie die der Trimethylolpropan-Fettsäure-Mischung in WO200136345A1 in Kautschukmischungen aufweisen.

Der vorliegenden Erfindung liegt demnach die Aufgabe zugrunde, toxikologisch weniger bedenkliche Kautschukmischungen bereitzustellen, verglichen mit Kautschukmischungen der WO2010136345A1, bei denen die anwendungsrelevanten Eigenschaften, bevorzugt das Nassbremsen, der Rollwiderstand und die Abriebbeständigkeit, weiter bevorzugt die Mooney Viskosität, gleich gut, bevorzugt besser, als bei den entsprechenden TMP-haltigen Kautschuk mischungen bzw. Vulkanisaten sind. Noch weiter bevorzugt sind auch weitere anwendungstechnische Eigenschaften wie Bruchfestigkeit und Bruchdehnung gleich gut, bevorzugt besser, als bei den entsprechenden TMP-haltigen Kautschukmischungen bzw. Vulkanisaten.

Überraschend wurde nun gefunden, dass bei Verwendung von mindestens einem Prozesshilfsmittel der Formel (I) in Kautschukmischungen enthaltend je mindestens einen Kautschuk, mindestens einen hydroxylgruppenhaltigen oxidischen Füllstoff, mindestens ein Verstärkungsadditiv aus der Reihe der schwefelhaltigen organischen Silane und mindestens einen Vernetzer aus der Reihe Schwefel und Schwefelspender Kautschukmischungen erhältlich sind, welche diese Aufgabe gegenüber den TMP-haltigen Äquivalenten lösen.

Die vorliegende Erfindung betrifft demnach Kautschukmischungen enthaltend
- mindestens einen Kautschuk,
- mindestens einen hydroxylgruppenhaltigen oxidischen Füllstoff,
- mindestens ein Verstärkungsadditiv aus der Reihe der schwefelhaltigen organischen Silane, und
- mindestens einen Vernetzer aus der Reihe Schwefel und Schwefelspender,

wobei weiter mindestens ein Prozesshilfsmittel der Formel (I) enthalten ist:

   R¹R²NZNR³R⁴ Formel (I)
wobei R¹, R², R³ und R⁴ jeweils unabhängig voneinander ausgewählt sind aus

   (CH₂)ₓCH(OH)(CH₂)_{w}H Formel (A)

   und

   (CH₂)_{y}CH₃ Formel (B)
mit x = 0-8, y = 0-8, w= 0-6,
wobei Z eine lineare oder verzweigte, substituierte oder unsubstituierte C₁-C₂₂ Alkylen-Kette ist, wobei die Verzweigungen auch einen cyclischen Ring, bevorzugt C₆-Cycloalkylen, ausbilden können, bevorzugt lineare oder verzweigte, substituierte oder unsubstituierte C₁-C₁₀ Alkylen-Kette, und
wobei mindestens zwei der Reste R¹, R², R³ und R⁴ unabhängig voneinander aus Formel (A) ausgewählt sind, und
wobei das mindestens eine Prozesshilfsmittel der Formel (I) bevorzugt in einer Menge von 0,1 - 30 phr, besonders bevorzugt von 0,5 - 25 phr, ganz besonders bevorzugt von 1 - 20 phr, meist bevorzugt von 3 - 15 phr, in der Kautschukmischung enthalten ist.

Als Indikator für den Rollwiderstand wird der Verlustfaktor tan delta bei 60 °C, bevorzugt bei einer Messfrequenz von 10 Hz, herangezogen. Als Indikator für Nassbremsen gilt der tan delta bei 0 °C bzw. 23°C, bevorzugt bei einer Messfrequenz von 10 Hz, und als Indikator für die Abriebbeständigkeit wird der DIN Abrieb betrachtet.

### Kautschuk

Die erfindungsgemäßen Kautschukmischungen enthalten mindestens einen Kautschuk. Dieser kann beispielsweise Naturkautschuk (NR) und/oder ein Synthesekautschuk sein.

Bevorzugte polare und unpolare Synthesekautschuke sind
- ACM -: Polyacrylat Kautschuk
- AEM -: Ethylenacrylat Kautschuk
- BR -: Polybutadien
- ABR -: Butadien/Acrylsäure-C1-C4-alkylester-Copolymerisat
- CR -: Polychloropren
- IR -: Polyisopren
- SBR -: Styrol/Butadien-Copolymerisate mit Styrolgehalten von 1 - 60, vorzugsweise 20-50 Gew-%
- IIR -: Isobutylen/Isopren-Copolymerisate
- NBR -: Butadien/Acrylnitril-Copolymerisate mit Acrylnitrilgehalten von 5-60, vorzugsweise 10-50 Gew.-%
- HNBR -: teilhydrierter oder vollständig hydrierter NBR-Kautschuk
- EPM -: Ethylen/Propylen-Copolymerisate
- EPDM -: Ethylen/Propylen/Dien-Copolymerisate
- EVM -: Ethylen/Vinylacetat-Copolymerisate
- SIBR -: Styrol-Isopren-Butadien Kautschuk
- ENR -: Epoxidierter Naturkautschuk
- SNBR -: Arcylnitril-Styrol/Butadien Kautschuk
- HNBR -: Hydrierter Arcylnitril/Butadien Kautschuk
- XNBR -: Carboxylisierter Arcylnitril/Butadien Kautschuk
- HXNBR -: Hydrierter carboxylisierter Arcylnitril/Butadien Kautschuk

Besonders bevorzugte polare und unpolare Synthesekautschuke sind BR, SBR, SIBR, IR und ENR.

Der mindestens eine Synthesekautschuk kann unfunktionalisiert sein oder funktionalisiert sein.

Die erfindungsgemäßen Kautschukmischungen können mindestens einen funktionalisierten Synthesekautschuk enthalten. Es gelten dafür die oben genannten Ausführungen für die unfunktionalisierten Synthesekautschuke mit dem Unterschied, dass diese bei funktionalisierten Synthesekautschuken funktionalisiert vorliegen.

Unter funktionalisiertem Synthesekautschuk ist im Rahmen der vorliegenden Erfindung ein Synthesekautschuk zu verstehen, der an der Hauptkette und/oder an den Endgruppen durch eine oder mehrere funktionelle Gruppen, bevorzugt ausgewählt aus Carboxylgruppen, Mercaptan-Gruppen, Alkoxysilan-Gruppen, Siloxan-Gruppen, Hydroxy-Gruppen, Ethoxy-Gruppen, Epoxy-Gruppen, Amino-Gruppen Phthalocyanin-Gruppen, Silan-Sulfid-Gruppen und Metallatom- enthaltenden Gruppen, substituiert ist, besonders bevorzugt ausgewählt aus Mercaptan-Gruppen, Alkoxysilan-Gruppen und Hydroxy-Gruppen, ganz besonders bevorzugt ausgewählt aus Mercaptan-Gruppen und Alkoxysilan-Gruppen.

Unfunktionalisierte Synthesekautschuke im Rahmen der vorliegenden Erfindung enthalten die vorgenannten Substitutionen durch funktionelle Gruppen nicht.

Die erfindungsgemäßen Kautschukmischungen enthalten bevorzugt mindestens einen funktionalisierten Synthesekautschuk, besonders bevorzugt ausgewählt aus der Gruppe bestehend aus polaren und unpolaren funktionalisierten Synthesekautschuken.

Bevorzugt ist der mindestens eine funktionalisierte Synthesekautschuk ausgewählt aus der Gruppe bestehend aus funktionalisiertem SBR-, funktionalisiertem BR- und funktionalisiertem IR-Kautschuk, besonders bevorzugt aus funktionalisiertem SBR- und funktionalisiertem BR-Kautschuk.

Bevorzugt enthalten die erfindungsgemäßen Kautschukmischungen mindestens einen funktionalisierten SBR-Kautschuk und/oder einen funktionalisierten BR-Kautschuk, besonders bevorzugt mindestens einen funktionalisierten SBR- und mindestens einen funktionalisierten BR-Kautschuk.

In einer bevorzugten Ausführungsform ist der mindestens eine Kautschuk ausgewählt aus der Gruppe bestehend aus Naturkautschuk und Synthesekautschuken, ist bevorzugt mindestens ein funktionalisierter Synthesekautschuk, besonders bevorzugt mindestens ein funktionalisierter Synthesekautschuk ausgewählt aus der Gruppe bestehend aus funktionalisiertem SBR-, funktionalisiertem BR- und funktionalisiertem IR-Kautschuk, ganz besonders bevorzugt aus funktionalisiertem SBR- und funktionalisiertem BR-Kautschuk.

Bevorzugt ist der mindestens eine funktionalisierte SBR-Kautschuk an der Hauptkette und/oder an den Endgruppen durch eine oder mehrere funktionelle Gruppen, insbesondere ausgewählt aus Mercaptan-Gruppen, Alkoxysilan-Gruppen und Hydroxy-Gruppen, substituiert, besonders bevorzugt durch mehrere funktionelle Gruppen, die Mercaptan-Gruppen und Alkoxysilan-Gruppen sind. Bevorzugt ist der mindestens eine funktionalisierte SBR-Kautschuk SPRINTAN^{®} SLR 3402 der Fa. Trinseo.

Bei dem funktionalisierten SBR-Kautschuk kann es sich um lösungspolymerisierten Styrol-Butadien-Kautschuk (SSBR) oder um emulsionspolymerisierten Styrol-Butadien-Kautschuk (ESBR) handeln, wobei auch ein Gemisch aus mindestens einem funktionalisierten SSBR und mindestens einem funktionalisierten ESBR eingesetzt werden kann.

Das Molgewicht (Mw) der Styrol-Butadien-Copolymere kann über einen weiten Bereich variieren. Bevorzugt sind Styrol-Butadien-Copolymere mit einem Mw von 250000 bis 600000 g/mol, besonders bevorzugt mit einem Mw von 350000 bis 500000 g/mol.

Bevorzugt ist der mindestens eine funktionalisierte BR-Kautschuk an der Hauptkette und/oder an den Endgruppen durch eine oder mehrere funktionelle Gruppen, ausgewählt aus Mercaptan-Gruppen, Alkoxysilan-Gruppen und Hydroxy-Gruppen, substituiert, besonders bevorzugt durch Alkoxysilan-Gruppen. Bevorzugt ist der mindestens eine funktionalisierte BR-Kautschuk NIPOL^{®} BR 1261 der Fa. Zeon.

Das Molgewicht der Butadien-Polymere kann über einen weiten Bereich variieren. Bevorzugt sind Butadien-Polymere mit einem Mw von 250000 bis 5000000 g/mol.

Polybutadien mit einem cis-Anteil größer oder gleich 90 Gew.-% wird als high-cis-Typ und Polybutadien mit einem cis-Anteil kleiner als 90 Gew.-% wird als low-cis-Typ bezeichnet. Ein low-cis-Polybutadien ist z.B. Li-BR (Lithium-katalysierter Butadien-Kautschuk) mit einem cis-Anteil von 20 bis 50 Gew.-%. Bevorzugt im Rahmen der vorliegenden Erfindung ist ein high-cis-Typ funktionalisierter BR-Kautschuk.

Die erfindungsgemäßen Kautschukmischungen enthalten bevorzugt 0 bis 100 phr mindestens eines funktionalisierten Synthesekautschuks, besonders bevorzugt 50 bis 100 phr, ganz besonders bevorzugt 70-100 phr.

Die erfindungsgemäßen Kautschukmischungen enthalten bevorzugt mindestens einen funktionalisierten SBR- und mindestens einen funktionalisierten BR-Kautschuk im Gewichtsverhältnis SBR:BR von 100:0 bis 0:100, besonders bevorzugt von 90:10 bis 10:90, ganz besonders bevorzugt von 90:10 bis 30:70, ganz ganz besonders bevorzugt von 80:20 bis 50:50.

Die erfindungsgemäßen Kautschukmischungen enthalten bevorzugt 0 bis 100 phr mindestens eines unfunktionalisierten Synthesekautschuks und/oder mindestens eines Naturkautschuks, besonders bevorzugt 0 bis 50 phr, ganz besonders bevorzugt 0 bis 30 phr.

### Füllstoffe

Der mindestens eine hydroxylgruppenhaltige oxidische Füllstoff ist bevorzugt ausgewählt aus der Gruppe bestehend aus Kieselsäuren, synthetischen Silikaten und natürlichen Silikaten.

Der Gehalt an hydroxylgruppenhaltigen oxidischen Füllstoffen in den erfindungsgemäßen Kautschukmischungen beträgt bevorzugt 0,1 bis 250 phr, besonders bevorzugt 20 bis 200 phr, ganz besonders bevorzugt 25 bis 180 phr und meist bevorzugt 30 bis 160 phr.

Als hydroxylgruppenhaltige oxidische Füllstoffe eignen sich bevorzugt solche aus der Reihe der
- Kieselsäuren, insbesondere mit einer spezifischen Oberfläche (BET) von 5 bis 1000, vorzugsweise 20 bis 400 m²/g, vorzugsweise mit Primärteilchengrößen von 100 bis 400 nm, wobei die Kieselsäuren gegebenenfalls auch als Mischoxide mit anderen Metalloxiden, wie Al-, Mg-, Ca-, Ba-, Zr-, Ti-oxiden vorliegen,
- synthetischen Silikate, wie Aluminiumsilikat, Erdalkalisilikate wie Magnesiumsilikat oder Calciumsilikat, mit spezifischen Oberflächen (BET) von 20 bis 400 m²/g, vorzugsweise mit Primärteilchengrößen von 10 bis 400 nm
   und
- natürlichen Silikate, wie Kaolin und andere natürliche vorkommende Kieselsäuren,
sowie Mischungen davon.

Die oben genannten BET Oberflächen werden gemäß DIN ISO 9277 bestimmt. Die Größenangaben der Primärteilchengrößen basieren auf Messungen mit einem Prüfgerät zur Partikelanalyse mittels Streulicht. Die Berechnung der Partikelgröße basiert dabei auf der Mie-Theorie, welche die Wechselwirkung zwischen Licht und Materie beschreibt (DIN/ISO 13320).

Bevorzugt sind die Kieselsäuren durch Fällung von Lösungen von Silikaten oder Flammenhydrolyse von Siliciumhalogeniden erhältlich.

Bevorzugt enthalten die erfindungsgemäßen Kautschukmischungen mindestens einen hydroxylgruppenhaltigen oxidischen Füllstoff aus der Reihe der Kieselsäuren, insbesondere mit einer spezifischen Oberfläche (BET) im Bereich von 5 bis 1000, bevorzugt 20 bis 400 m²/g in einer Menge von 0,1 bis 250 phr, bevorzugt 20 bis 200 phr , besonders bevorzugt von 25 bis 180 phr, ganz besonders bevorzugt 30 bis 160 phr.

Die erfindungsgemäßen Kautschukmischungen können als Füllstoff mindestens einen Ruß enthalten.

In einer bevorzugten Ausführungsform enthalten die erfindungsgemäßen Kautschukmischungen als Füllstoff mindestens einen Ruß.

Bevorzugt enthalten die erfindungsgemäßen Kautschukmischungen mindestens einen Ruß in einer Menge von 0,1 bis 120 phr, besonders bevorzugt 0,1 bis 100 phr, ganz besonders bevorzugt 1 bis 70 phr, meist bevorzugt 2 bis 40 phr.

Bevorzugt sind Ruße, die nach dem Flammruß-, Furnace- oder Gasrußverfahren erhältlich sind und die eine spezifische Oberfläche (BET) im Bereich von 20 bis 200 m²/g besitzen, wie z.B. SAF-, ISAF-, IISAF-, HAF-, FEF- oder GPF-Ruße. Bevorzugt enthalten die erfindungsgemäßen Kautschukmischungen mindestens einen Ruß mit einer spezifische Oberfläche (BET) im Bereich von 20 bis 200 m ²/g .

Besonders bevorzugt enthalten die erfindungsgemäßen Kautschukmischungen als Füllstoffe mindestens eine der oben genannten Kieselsäuren und mindestens einen der oben genannten Ruße. Ganz besonders bevorzugt enthalten die erfindungsgemäßen Kautschukmischungen als Füllstoffe 25 bis 180 phr, bevorzugt 30 bis 160 phr, mindestens eine der oben genannten Kieselsäuren und 1,0 bis 70 phr, bevorzugt 2,0 bis 40 phr, mindestens einen der oben genannten Ruße.

Die Gesamtmenge an Ruß und kieselsäurebasierenden Füllstoffen in der erfindungsgemäßen Kautschukmischung beträgt bevorzugt 26 bis 250 phr, besonders bevorzugt 32 bis 200 phr.

### Vernetzer und Vulkanisationsbeschleuniger

Die erfindungsgemäßen Kautschukmischungen enthalten mindestens einen Vernetzer aus der Reihe Schwefel und Schwefelspender. Sie können weiter mindestens einen Vulkanisationsbeschleuniger enthalten.

### Vernetzer

Die erfindungsgemäßen Kautschukmischungen enthalten mindestens einen Vernetzer aus der Reihe Schwefel und Schwefelspender.

Schwefel kann in elementarer löslicher oder unlöslicher Form eingesetzt werden. Besonders bevorzugt enthalten die erfindungsgemäßen Kautschukmischungen mindestens einen Schwefelspender und/oder Schwefel, ganz besonders bevorzugt Schwefel.

Als Schwefelspender kommen beispielsweise Dimorpholyldisulfid (DTDM), 2-Morpholinodithiobenzothiazol (MBSS), Caprolactamdisulfid, Dipentamethylen-thiuramtetrasulfid (DPTT), Tetramethylthiuramdisulfid (TMTD) und Tetrabenzyl-thiuramdisulfid (TBzTD) in Frage.

Die erfindungsgemäßen Kautschukmischungen enthalten im Allgemeinen 0,1 bis 20 phr, bevorzugt 0,5 bis 10 phr, besonders bevorzugt von 1,0 bis 8 phr und meist bevorzugt 1 bis 4 phr des mindestens einen Vernetzers aus der Reihe Schwefel und Schwefelspender.

Zinkoxid kann in den erfindungsgemäßen Kautschukmischungen zugegen sein.

Bevorzugte erfindungsgemäße Kautschukmischungen enthalten Zinkoxid mit einer BET-Oberfläche von 2 bis 100 m²/g, bevorzugt 2 bis 70 m²/g. BET-Oberflächen von Zinkoxid können gemäß DIN ISO 9277 gemessen werden.

Im Allgemeinen ist Zinkoxid in einer Menge von 0 bis 20 phr, bevorzugt von 0,1 bis 10 phr, besonders bevorzugt von 1 bis 5 phr in den erfindungsgemäßen Kautschukmischungen enthalten.

### Vulkanisationsbeschleuniger

Die erfindungsgemäßen Kautschukmischungen können mindestens einen Vulkanisationsbeschleuniger enthalten.

Bevorzugt enthalten die erfindungsgemäßen Kautschukmischungen mindestens einen Vulkanisationsbeschleuniger.

Die Menge des mindestens einen Vulkanisationsbeschleunigers in der erfindungsgemäßen Mischung beträgt 0 bis 20 phr, bevorzugt 0,1 bis 10 phr und besonders bevorzugt 0,2 bis 5 phr.

Besonders bevorzugt ist der mindestens eine Vulkanisationsbeschleuniger ausgewählt aus der Gruppe der Mercapto-benzthiazole, Thiocarbamate, Dithiocarbamate, Thiurame, Thiazole, Sulfenamide, Thiazolsulfenamide, Xanthogenate, bi- oder polycyclische Amine, Thiophosphate, Dithiophosphate, Caprolactame, Thioharnstoffderivate, Guanidine, cyclischen Disulfane sowie Amine, insbesondere Zink-diamindiisocyanat, Hexamethylentetramin, 1,3-Bis(citraconimidomethyl)benzol, und ganz besonders bevorzugt aus der Gruppe der Sulfenamide, ganz ganz besonders bevorzugt N-Cyclohexylbenzothiazolsulfenamid (CAS-Nr.: 95-33-0).

Bevorzugt enthalten die erfindungsgemäßen Kautschukmischungen mindestens einen Vulkanisationsbeschleuniger, der N-Cyclohexylbenzothiazolsulfenamid enthält.

In der erfindungsgemäßen Mischung können Guanidin-haltige Verbindungen als der mindestens eine Vulkanisationsbeschleuniger enthalten oder gar nicht enthalten sein.

Guanidin-haltige Verbindungen sind beispielsweise Diphenylguanidin (DPG), Di-ortho-tolyl-guanidin (DOTG), 1-(ortho-Tolyl)biguanid, substituierte Diphenylguanidine und andere organische Guanidin-Derivate, bei denen die Guanidinfunktion mit ein oder mehreren C₁-C₈ Alkylgruppen, C₂-C₈ Alkenylgruppen, C₆-C₈ Arylgruppen, C₇-C₁₀ Aralkylgruppen und/oder C₁-C₈ Heteroalkylgruppen substituiert ist.

Unter dem Begriff substituierte Diphenylguanidine sind im Sinne der vorliegenden Erfindung bevorzugt solche Diphenylguanidine zu verstehen, bei denen mindestens ein Phenyl-Ring substituiert ist, bevorzugt beide Phenyl-Ringe substituiert sind. Als Substituenten sind verschiedenste Substituenten möglich. Bevorzugt ist ein Substituent eines Phenyl-Rings ausgewählt aus der Gruppe bestehend aus C₁-C₂₀-Alkyl, das substituiert oder unsubstituiert ist, C₂-C₂₀-Alkenyl, das substituiert oder unsubstituiert ist und eine oder mehrere Doppelbindungen enthält, C₂-C₂₀-Alkinyl, das substituiert oder unsubstituiert ist und eine oder mehrere Dreifachbindungen enthält, C₃-C₂₀-Aryl, das substituiert oder unsubstituiert ist, Heteroaryl, das substituiert oder unsubstituiert ist, fünf- bis zwanzig-gliedrig ist und ein oder mehrere Heteroatome enthält, C₃-C₁₄-Cycloalkyl, das substituiert oder unsubstituiert ist, Heterocycloalkyl, das substituiert oder unsubstituiert ist, drei- bis acht-gliedrig ist und ein oder mehrere Heteroatome enthält, und Heteroatomen.

In einer bevorzugten Ausführungsform ist in der erfindungsgemäßen Mischung mindestens eine Guanidin-haltige Verbindung in dem mindestens einen Vulkanisationsbeschleuniger enthalten, besonders bevorzugt DPG.

Ganz ganz besonders bevorzugt enthält der mindestens eine Vulkanisationsbeschleuniger in der erfindungsgemäßen Kautschukmischung N-Cyclohexylbenzothiazolsulfenamid und DPG, meist bevorzugt besteht der mindestens eine Vulkanisationsbeschleuniger aus N-Cyclohexylbenzothiazolsulfenamid und DPG.

Die Gesamtmenge an Vernetzer und Vulkanisationsbeschleuniger in den Kautschukmischungen beträgt bevorzugt 0,5 bis 30 phr, besonders bevorzugt von 1,1 bis 18 phr, meist bevorzugt 1,2 bis 9 phr.

### Prozesshilfsmittel

Die erfindungsgemäßen Kautschukmischungen enthalten mindestens ein Prozesshilfsmittel der Formel (I):

R¹R²NZNR³R⁴ Formel (I)

wobei R¹, R², R³ und R⁴ jeweils unabhängig voneinander ausgewählt sind aus

   (CH₂)ₓCH(OH)(CH₂)_{w}H Formel (A)

   und

   (CH₂)_{y}CH₃ Formel (B)
mit x = 0-8, y = 0-8, w= 0-6,
wobei Z eine lineare oder verzweigte, substituierte oder unsubstituierte C₁-C₂₂ Alkylen-Kette ist, wobei die Verzweigungen auch einen cyclischen Ring, bevorzugt C₆-Cycloalkylen, ausbilden können, bevorzugt lineare oder verzweigte, substituierte oder unsubstituierte C₁-C₁₀ Alkylen-Kette, und
wobei mindestens zwei der Reste R¹, R², R³ und R⁴ unabhängig voneinander aus Formel (A) ausgewählt sind, und
wobei das mindestens eine Prozesshilfsmittel der Formel (I) bevorzugt in einer Menge von 0,1 - 30 phr, besonders bevorzugt von 0,5 - 25 phr, ganz besonders bevorzugt von 1 - 20 phr, meist bevorzugt von 3 - 15 phr, in der Kautschukmischung enthalten ist.

In Formel (I) ist x = 0-8, bevorzugt x = 0-3, besonders bevorzugt x = 0-2, meist bevorzugt x = 1, und y = 0-8, bevorzugt y = 0-3, besonders bevorzugt y = 0-2, meist bevorzugt y = 0, und w = 0-6, bevorzugt w = 0-3, besonders bevorzugt w = 0-1, meist bevorzugt w = 1.

In Formel (I) ist Z eine lineare oder verzweigte, substituierte oder unsubstituierte C₁-C₂₂ Alkylen-Kette, wobei die Verzweigungen auch einen cyclischen Ring, bevorzugt C₆-Cycloalkylen, ausbilden können, bevorzugt lineare oder verzweigte, substituierte oder unsubstituierte C₁-C₁₀ Alkylen-Kette, besonders bevorzugt lineare oder verzweigte, substituierte oder unsubstituierte C₂-C₆ Alkylen-Kette, ganz besonders bevorzugt lineare oder verzweigte, substituierte oder unsubstituierte C₃ Alkylen-Kette.

In einer bevorzugten Ausführungsform ist Z ein lineare, substituierte oder unsubstituierte C₁-C₂₂ Alkylen-Kette, bevorzugt lineare, substituierte oder unsubstituierte C₁-C₁₀ Alkylen-Kette, besonders bevorzugt lineare, substituierte oder unsubstituierte C₂-C₆ Alkylen-Kette, ganz besonders bevorzugt lineare, substituierte oder unsubstituierte C₃ Alkylen-Kette.

In einer besonders bevorzugten Ausführungsform ist Z = (CH₂)_{z} mit z = 1-22, bevorzugt z = 1-10, besonders bevorzugt z = 2-6, ganz besonders bevorzugt z = 3.

Bevorzugt sind erfindungsgemäße Kautschukmischungen enthaltend das mindestens eine Prozesshilfsmittel der Formel (I) mit Z = (CH₂)_{z} mit z = 1-10, x = 0-3, y = 0-3, w = 0-3, besonders bevorzugt mit z = 2-6, x = 0-2, y = 0-2, w = 0-1, meist bevorzugt mit z = 3, x = 1, y = 0, w = 1.

In einer alternativen Ausführungsform ist Z eine verzweigte, substituierte oder unsubstituierte C₁-C₂₂ Alkylen-Kette, bevorzugt verzweigte, substituierte oder unsubstituierte C₁-C₁₀ Alkylen-Kette, wobei die Verzeigungen auch einen cyclischen Ring, bevorzugt C₆-Cycloalkylen, ausbilden können. In dieser alternativen Ausführungsform ist Z bevorzugt ausgewählt aus 2,2,4-Trimethyl-hexamethylen, 2,4,4-Trimethyl-hexamethylen und einer Verbindung der Formel (C):

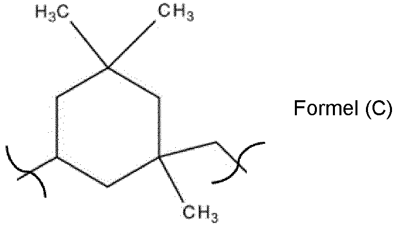

Formel (C) umfasst vier Stereoisomere, die alle von der Verbindung der Formel (C) umfasst sind. Bei Auswahl von Z aus der Verbindung der Formel (C) ist eine Auswahl von einem oder mehreren Stereoisomeren aus der Formel (C) möglich.

Bevorzugt sind R¹ und R² in dem mindestens einen Prozesshilfsmittel der Formel (I) unabhängig voneinander ausgewählt aus Formel (A). Besonders bevorzugt sind R¹ und R² gleich und ausgewählt aus Formel (A).

Bevorzugt sind R³ und R⁴ in dem mindestens einen Prozesshilfsmittel der Formel (I) unabhängig voneinander ausgewählt aus Formel (B). Besonders bevorzugt sind R³ und R⁴ gleich und ausgewählt aus Formel (B).

In einer besonders bevorzugten Ausführungsform ist Z = (CH₂)_{z} mit z = 2-6, meist bevorzugt z =3, und R¹ und R² sind gleich und ausgewählt aus Formel (A) mit x = 0-2, meist bevorzugt x=1, und mit w = 0-1, meist bevorzugt w = 1, und R³ und R⁴ sind gleich und ausgewählt aus Formel (B) mit y = 0-2, meist bevorzugt y = 0.

In einer meist bevorzugten Ausführungsform ist das mindestens eine Prozesshilfsmittel der Formel (I) *N,N*-Dimethyl-*N*',*N*'-bis(2-hydroxypropyl)-1,3-diamin.

In einer weiteren bevorzugten Ausführungsform sind mindestens drei der Reste R¹, R², R³ und R⁴ unabhängig voneinander ausgewählt aus Formel (A). Besonders bevorzugt sind diese mindestens drei Reste gleich, ganz besonders bevorzugt mit x = 0-2, meist bevorzugt x=1, und mit w = 0-1, meist bevorzugt w = 1.

Erfindungsgemäße Kautschukmischungen können neben dem mindestens einen Prozesshilfsmittel der Formel (I) noch ein oder mehrere weitere Prozesshilfsmittel enthalten, die von dem mindestens einen Prozesshilfsmittel der Formel (I) verschieden sind.

Bevorzugt stellt das mindestens eine Prozesshilfsmittel der Formel (I) mindestens 20 Gew.-%, besonders bevorzugt mindestens 40 Gew.-%, ganz besonders bevorzugt mindestens 70 Gew.-%, meist bevorzugt zu mindestens 80 Gew.-% der Prozesshilfsmittel, die in der erfindungsgemäßen Kautschukmischung enthalten sein können, dar, wobei die Gew.-% bezogen sind auf die Gesamtmenge der Prozesshilfsmittel.

Diese weiteren Prozesshilfsmittel können beispielsweise Alkohole, Amide, Säuren, Ester, Tenside und/oder Amide sein. Ein bevorzugtes weiteres Prozesshilfsmittel in der erfindungsgemäßen Kautschukmischung ist ausgewählt aus der Gruppe enthaltend Alkohole, Säuren und Ester, bevorzugt aus der Gruppe enthaltend Säuren, besonders bevorzugt ausgewählt aus Palmitinsäure und Stearinsäure, ganz besonders bevorzugt Stearinsäure.

Im Rahmen dieser Erfindung dienen Prozesshilfsmittel bevorzugt dazu, die Verarbeitbarkeit der Kautschukmischung zu verbessern, besonders bevorzugt den Transport der Kautschukmischung durch den Mischer zu verbessern.

Bevorzugt sind die Prozesshilfsmittel im Rahmen der vorliegenden Erfindung verschieden von den sonstigen Inhaltsstoffen der erfindungsgemäßen Kautschukmischung, wie dem mindestens einen Kautschuk, dem mindestens einen hydroxylgruppenhaltigen oxidischen Füllstoff, dem mindestens einen Verstärkungsadditiv aus der Reihe der schwefelhaltigen organischen Silane, dem mindestens einen Vernetzer aus der Reihe Schwefel und Schwefelspender, dem optionalen mindestens einen Vulkanisationsbeschleuniger und dem optionalen einen oder mehrere Kautschukhilfsmittel.

Das mindestens eine Prozesshilfsmittel der Formel (I) ist in den erfindungsgemäßen Kautschukmischungen bevorzugt in einer Menge von 0,1 - 30 phr enthalten, besonders bevorzugt von 0,5 - 25 phr, ganz besonders bevorzugt von 1 - 20 phr, meist bevorzugt von 3 - 15 phr.

### Verstärkungsadditive

Die erfindungsgemäßen Kautschukmischungen enthalten mindestens ein Verstärkungsadditiv aus der Reihe der schwefelhaltigen organischen Silane.

Bevorzugte schwefelhaltige organische Silane sind bifunktionelle schwefelhaltige organische Silane, die am Siliciumatom mindestens eine Alkoxy-, Cycloalkoxy-, oder Phenoxygruppe aufweisen und als andere Funktionalität eine Gruppe ausgewählt aus -SCN, -SH oder -Sx- mit x = 2 bis 8.

Besonders bevorzugt sind Alkoxysilylgruppen-haltige schwefelhaltige Silane und ganz besonders bevorzugt Trialkoxysilylgruppen-haltige schwefelhaltige organische Silane.

Meist bevorzugt enthalten die erfindungsgemäßen Kautschukmischungen ein oder mehrere schwefelhaltige Silane aus der Reihe Bis-(triethoxysilylpropyl)-tetrasulfan, Bis-(triethoxysilylpropyl - disulfan und 3-(Triethoxysilyl)-1-propanthiol.

Flüssige schwefelhaltige Silane können zur besseren Dosierbarkeit und/oder Dispergierbarkeit auf einem Träger aufgezogen werden (dry liquid). Der Gehalt an schwefelhaltigen Silanen in diesen "dry liquids" liegt bevorzugt zwischen 30 und 70 Gew.-Teilen, besonders bevorzugt zwischen 40 und 60 Gew.-Teilen je 100 Gew.-Teile dry liquid.

Die erfindungsgemäßen Kautschukmischungen enthalten im Allgemeinen 0,1 bis 20 phr, vorzugsweise 0,5 bis 15 phr und besonders bevorzugt 1,0 bis 10 phr an mindestens einem Verstärkungsadditiv aus der Reihe der schwefelhaltigen organischen Silane.

### Kautschukhilfsmittel

Die erfindungsgemäßen Kautschukmischungen können weiterhin ein oder mehrere Kautschukhilfsmittel enthalten. Als Kautschukhilfsmittel kommen beispielsweise Alterungsschutzmittel, Haftmittel, Wärmestabilisatoren, Lichtschutzmittel, Flammschutzmittel, Verarbeitungshilfsmittel, Schlagzähfestigkeitsverbesserer, Weichmacher, Tackifier, Treibmittel, Farbstoffe, Pigmente, Wachse, Streckmittel, organische Säuren, Verzögerer, und Reversionsschutzmittel in Frage.

Die erfindungsgemäßen Kautschukmischungen können ein oder mehrere Alterungsschutzmittel enthalten. Als solche geeignet sind aminische Alterungsschutzmittel wie z. B. Diaryl-p-phenylendiaminen (DTPD), octyliertes Diphenylamin (ODPA), Phenyl-α-naphthylamin (PAN), Phenyl-β-naphthylamin (PBN), vorzugsweise solche auf Phenylen-diaminbasis, z. B. N,N'-Dicyclohexyl-p-phenylendiamin (CCPD), N-Isopropyl-N'-phenyl-p-phenylen¬diamin, N 1,3-Dimethylbutyl-N'-phenyl-p-phenylen-diamin (6PPD), N-1,4-Dimethylpentyl-N'-phenyl-p phenylendiamin (7PPD), N,N'-bis-(1,4-Dimethylpentyl)-p-phenylendiamin (77PD) sowie Phosphite wie Tris-(nonylphenyl)phosphit, polymerisiertes 2,2,4-Trimethyl-1,2-dihydrochinolin (TMQ), Methyl-2-Mercapto-benzimidazol (MMBI) und Zinkmethylmercaptobenzimidazol (ZMMBI) sowie Mischungen davon. Besonders bevorzugt wird das mindestens eine Alterungsschutzmittel ausgewählt aus der Gruppe bestehend aus N,N'-Dicyclohexyl-p-phenylendiamin (CCPD) und N 1,3-Dimethyl¬butyl-N'-phenyl-p-phenylen-diamin (6PPD).

Verarbeitungshilfsmittel sollen zwischen den Kautschuk-Partikeln wirksam werden und Reibungskräften beim Mischen, Plastifizieren und Verformen entgegenwirken. Als Verarbeitungshilfsmittel können die erfindungsgemäßen Kautschukmischungen alle für die Verarbeitung von Kunststoffen üblichen Gleitmittel enthalten, wie beispielsweise Kohlenwasserstoffe, wie Öle, z.B. aromatisches Prozessöl, Paraffine und PE-Wachse, Fettalkohole mit 6 bis 20 C- Atomen, Ketone, Carbonsäuren, wie Fettsäuren und Montansäuren, oxidiertes PE-Wachs, aromatisch modifizierte cycloaliphatische Kohlenwasserstoffharze, Metallsalze von Carbonsäuren, Carbonsäureamide sowie Carbonsäureester, beispielsweise mit den Alkoholen Ethanol, Fettalkoholen, Glycerin, Ethandiol, Pentaerythrit und langkettigen Carbonsäuren als Säurekomponente.

Um die Entflammbarkeit zu vermindern und die Rauchentwicklung beim Verbrennen zu verringern, können die erfindungsgemäße Kautschukmischungen Flammschutzmittel enthalten. Hierfür werden beispielsweise Antimontrioxid, Phosphorsäureester, Chlorparaffin, Aluminiumhydroxid, Borverbindungen, Zinkverbindungen ausgenommen ZnO, Molybdäntrioxid, Ferrocen, Calciumcarbonat oder Magnesiumcarbonat verwendet.

Vor der Vernetzung können der erfindungsgemäßen Kautschukmischungen auch weitere Kunststoffe beigefügt werden, die beispielsweise als polymere Verarbeitungshilfsmittel oder Schlagzähigkeitsverbesserer wirken. Diese Kunststoffe werden bevorzugt gewählt aus der Gruppe bestehend aus den Homo- und Copolymeren auf Basis von Ethylen, Propylen, Butadien, Styrol, Methylstyrol, Cumaren, Inden, Vinylacetat, Vinylchlorid, Glycidylacrylat, Glycidylmethacrylat, Acrylaten und Methacrylaten mit Alkoholkomponenten von verzweigten oder unverzweigten C1- bis C10-Alkoholen, wobei Polyacrylate mit gleichen oder verschiedenen Alkoholresten aus der Gruppe der C4- bis C8-Alkohole, insbesondere des Butanols, Hexanols, Octanols und 2-Ethylhexanols, Polymethylmethacrylat, Methylmethacrylat-Butylacrylat-Copolymere, Methylmethacrylat-Butylmethacrylat-Copolymere, Ethylen-Vinylacetat-Copolymere, chloriertes Polyethylen, Ethylen-Propylen-Copolymere, Ethylen-Propylen-Dien-Copolymere besonders bevorzugt sind.

Bekannte Haftmittel basieren auf Resorcin, Formaldehyd und Silica, die sogenannten RFS-Direkthaftsysteme. Diese Direkthaftsysteme können in beliebiger Menge der erfindungsgemäßen Kautschukmischung zu jedem Zeitpunkt des Einmischens in die erfindungsgemäßen Kautschukmischungen, eingesetzt werden.

Darüber hinaus können die erfindungsgemäßen Kautschukmischungen mindestens einen Vulkanisationsverzögerer enthalten.

Als solche kommen beispielsweise Vulkanisationsverzögerer aus der Gruppe der Sulfenamid-Verzögerer basierend auf acidischen Verbindungen wie Phthalsäure, Phthalsäureanhydrid, Benzoesäure oder Salicylsäure, und der Gruppe der *N*-Nitroso-Verbindungen basierend auf Diphenylamin oder Trimethyldihydroquinolin, in Frage.

Bevorzugt ist der mindestens eine Vulkanisationsverzögerer ausgewählt aus der Gruppe bestehend aus Sulfenamid-Verzögerern, ganz besonders bevorzugt ausgewählt aus N-Cyclohexylthiophthalimid und N-Phenyl-N-(trichlormethylsulfenyl)-benzolsulfonamid, meist bevorzugt N-Cyclohexyl-thiophthalimid.

Übliche Mengen für den mindestens einen Vulkanisationsverzögerer sind 0,01 - 10 phr.

Die in der erfindungsgemäßen Mischung enthaltenen Kautschukhilfsmittel sind bevorzugt verschieden von den sonstigen Inhaltsstoffen der erfindungsgemäßen Kautschukmischung, wie dem mindestens einen Kautschuk, dem mindestens einen hydroxylgruppenhaltigen oxidischen Füllstoff, dem mindestens einen Verstärkungsadditiv aus der Reihe der schwefelhaltigen organischen Silane, dem mindestens einen Vernetzer aus der Reihe Schwefel und Schwefelspender, dem optionalen mindestens einen Vulkanisationsbeschleuniger, dem mindestens einen Prozesshilfsmittel der Formel (I) und den optionalen weiteren Prozesshilfsmitteln.

Die Kautschukhilfsmittel können den erfindungsgemäßen Kautschukmischungen in den für diese Hilfsmittel üblichen Mengen, die sich auch nach dem Verwendungszweck der daraus hergestellten Vulkanisate richten, zugesetzt werden. Übliche Mengen sind beispielsweise 0,1 bis 30 phr.

Sofern ein Kautschukhilfsmittel jedoch mit einem der anderen Inhaltsstoffe der erfindungsgemäßen Kautschukmischungen, beispielsweise dem mindestens einen Kautschuk, dem mindestens einen hydroxylgruppenhaltigen oxidischen Füllstoff, dem mindestens einen Verstärkungsadditiv aus der Reihe der schwefelhaltigen organischen Silane, dem mindestens einen Vernetzer aus der Reihe Schwefel und Schwefelspender, dem optionalen mindestens einen Vulkanisationsbeschleuniger, dem mindestens einen Prozesshilfsmittel der Formel (I) und/oder und den optionalen weiteren Prozesshilfsmitteln überlappt, ist dieses Kautschukhilfsmittel bevorzugt nur als Mengenergänzung zu den für diesen anderen Inhaltsstoff angegebenen allgemeinen und bevorzugten Mengenangaben in der erfindungsgemäßen Kautschukmischung enthalten.

Besonders bevorzugt sind erfindungsgemäße Kautschukmischungen enthaltend
- 50 bis 100 phr mindestens eines funktionalisierten Synthesekautschuks, bevorzugt 70 - 100 phr, bevorzugt eines funktionalisierten BR-Kautschuks und/oder funktionalisierten SBR-Kautschuks,
- 0 bis 50 phr mindestens eines Naturkautschuks und/ oder unfunktionalisierten Synthesekautschuks, bevorzugt 0 bis 30 phr,
- 20 bis 200 phr mindestens eines hydroxylgruppenhaltigen oxidischen Füllstoffs,
- 0,5 bis 15 phr mindestens eines Verstärkungsadditives aus der Gruppe der schwefelhaltigen organischen Silane, bevorzugt bifunktionelle schwefelhaltige organische Silane, die am Siliciumatom mindestens eine Alkoxy-, Cycloalkoxy-, oder Phenoxygruppe aufweisen und als andere Funktionalität eine Gruppe ausgewählt aus -SCN, -SH oder -Sx- mit x = 2 bis 8, besonders bevorzugt Alkoxysilylgruppen-haltige schwefelhaltige Silane und ganz besonders bevorzugt Trialkoxysilylgruppen-haltige schwefelhaltige organische Silane,
- 0,1 bis 120 phr mindestens eines Ruß, bevorzugt 0,1 bis 100 phr,
- 0,5 bis 10 phr mindestens eines Vernetzers aus der Reihe Schwefelspender und Schwefel,
- 0,1 bis 10 phr Zinkoxid,
- 0,1 bis 10 phr mindestens eines Vulkanisationsbeschleunigers,
- 0,1 bis 30 phr mindestens eines Prozesshilfsmittels der Formel (I), bevorzugt 0,5 - 25 phr, besonders bevorzugt 1 - 20 phr, ganz besonders bevorzugt 3 - 15 phr.

Die oben genannten weiteren Vorzugsbereiche der einzelnen Komponenten gelten auch für diese bevorzugten Mischungen.

### Verfahren zur Herstellung der Kautschukmischungen

Ein weiterer Gegenstand der vorliegenden Erfindung ist ein Verfahren zur Herstellung der erfindungsgemäßen Kautschukmischungen, dadurch gekennzeichnet, dass in einem Mischprozess die jeweiligen Komponenten gemischt werden.

Bevorzugt werden mindestens ein Kautschuk in Gegenwart von mindestens einem hydroxylgruppenhaltigen oxidischen Füllstoff, mindestens einem Verstärkungsadditiv aus der Gruppe der schwefelhaltigen organischen Silane, gegebenenfalls mindestens einem Vulkanisationsbeschleuniger, und mindestens einem Prozesshilfsmittel der Formel (I) sowie gegebenenfalls weiteren Kautschukhilfsmitteln und gegebenenfalls weiteren Prozesshilfsmitteln in den genannten allgemeinen und bevorzugten Mengen bei einer Temperatur im Bereich von 50 bis 180°C, besonders bevorzugt 60 bis 170°C, miteinander vermischt.

Die Herstellung der erfindungsgemäßen Kautschukmischungen erfolgt in üblicher Weise in bekannten Mischaggregaten, wie Walzen, Innenmischern, nachgeschalteten Mischwalzwerken und Mischextrudern bei Scherraten von 1 bis 1000 sec⁻¹.

Bevorzugt erfolgt die Herstellung der erfindungsgemäßen Kautschukmischungen in einem dreistufigen Mischprozess.

Bevorzugt werden in einer ersten Mischstufe zunächst Kautschuk, die Füllstoffe sowie ggfs. weitere oben genannte Kautschukhilfsmittel, bevorzugt Alterungsschutzmittel, und gegebenenfalls der mindestens eine Vulkanisationsbeschleuniger, bevorzugt der Guanidin-haltige Vulkanisationsbeschleuniger, und das mindestens eine Prozesshilfsmittel der Formel (I) sowie gegebenenfalls wietere Prozesshilfsmittel in einem Innenmischer (Kneter) in den Kautschuk eingearbeitet.

Bevorzugt werden der mindestens eine Kautschuk, der mindestens eine hydroxylgruppenhaltige oxidische Füllstoff, das mindestens eine Verstärkungsadditiv aus der Gruppe der schwefelhaltigen organischen Silane, gegebenenfalls der mindestens eine Vulkanisationsbeschleuniger, bevorzugt der Guanidin-haltige Vulkanisationsbeschleuniger, und das mindestens eine Prozesshilfsmittel der Formel (I) sowie gegebenenfalls weitere Kautschukhilfsmittel in der ersten Mischstufe in dem Verfahren zur Herstellung der erfindungsgemäßen Kautschukmischungen gemischt.

Mischtemperaturen im Innenmischer können Werte bis zu 180°C erreichen. Die Temperatur in der ersten Mischstufe beträgt bevorzugt 130 bis 180°C, besonders bevorzugt 140 bis 170°C.

Danach erfolgt als zweiter Schritt bevorzugt das sogenannte Nachzwicken, bevorzugt bei 130 - 180°C, besonders bevorzugt bei 160°C. Das Nachzwicken kann beispielsweise in einem Innenmischer erfolgen.

Bevorzugt werden in einer dritten Mischstufe der mindestens eine Vernetzer aus der Reihe Schwefel und Schwefelspender sowie gegebenenfalls der mindestens eine weitere Vulkanisationsbeschleuniger und gegebenenfalls weitere Kautschukhilfsmittel zu der aus der zweiten Mischstufe erhaltenen Kautschukmischung gegeben. Die Temperatur in der dritten Mischstufe beträgt bevorzugt 50 - 130°C, besonders bevorzugt 60 bis 120°C.

Die Zugabe des Prozesshilfsmittels der Formel (I) kann zu jedem Zeitpunkt des Mischens erfolgen, vorzugsweise in der ersten Mischstufe bei einer Temperatur im Bereich von 130°C bis 180°C, bevorzugt bei einer Temperatur von 140 bis 170°C.

In einer besonders bevorzugten Ausführungsform des Verfahrens zur Herstellung der erfindungsgemäßen Kautschukmischungen werden
- zunächst der mindestens eine Kautschuk, der mindestens eine hydroxylgruppenhaltige oxidische Füllstoff, das mindestens eine Verstärkungsadditiv aus der Gruppe der schwefelhaltigen organischen Silane, gegebenenfalls der mindestens eine Vulkanisationsbeschleuniger, bevorzugt der Guanidin-haltige Vulkanisationsbeschleuniger, und das mindestens eine Prozesshilfsmittel der Formel (I) sowie gegebenenfalls weitere Kautschukhilfsmittel und gegebenenfalls weitere Prozesshilfsmittel gemischt, bevorzugt bei 130 bis 180°C, und
- im Anschluss der mindestens eine Vernetzer aus der Reihe Schwefel und Schwefelspender sowie gegebenenfalls der mindestens eine weitere Vulkanisationsbeschleuniger und gegebenenfalls weitere Kautschukhilfsmittel zu der erhaltenen Kautschukmischung gegeben, bevorzugt bei 50 - 130°C.

### Verfahren zur Herstellung der Kautschukvulkanisate

Die vorliegende Erfindung betrifft weiterhin ein Verfahren zur Herstellung von Kautschukvulkanisaten, dadurch gekennzeichnet, dass die erfindungsgemäße Kautschukmischung bei Temperaturen von 120 bis 200°C, bevorzugt bei 140 bis 180°C, erhitzt wird.

Das Verfahren zur Herstellung der erfindungsgemäßen Kautschukvulkanisate kann in einem weiten Druckbereich durchgeführt werden, bevorzugt wird es bei einem Druck im Bereich von 10 bis 200 bar durchgeführt.

Weiterer Gegenstand der vorliegenden Erfindung sind Kautschukvulkanisate, die erhältlich sind durch Vulkanisation der erfindungsgemäßen Kautschukmischungen.

### Formkörper

Die erfindungsgemäßen Kautschukvulkanisate eignen sich zur Herstellung von Formkörpern aller Art wie z.B. Reifenbauteilen, technischen Gummiartikeln wie Dämpfungselementen, Walzenbelägen, Belägen von Förderbändern, Riemen, Spinnkopsen, Dichtungen, Golfballkernen, Schuhsohlen, insbesondere eignen sie sich zur Herstellung von Reifen und Reifenteilen, wie Reifenlaufflächen, Subtreads, Karkassen Seitenwänden von Reifen, verstärkten Seitenwänden für Notlaufreifen und Apexmischungen. Reifenlaufflächen schließen dabei auch Laufflächen von Sommer-, Winter- und All-Seasons-Reifen sowie Laufflächen von PKW- und LKW-, Leicht-LKW-Reifen ein.

Bevorzugte Formkörper sind Reifen und Reifenteile enthaltend ein erfindungsgemäßes Kautschukvulkanisat.

### Verwendung

Weiterer Gegenstand der vorliegenden Erfindung ist die Verwendung des mindestens einen Prozesshilfsmittels der Formel (I)

R¹R²NZNR³R⁴ Formel (I)

wobei R¹, R², R³ und R⁴ jeweils unabhängig voneinander ausgewählt sind aus

   (CH₂)ₓCH(OH)(CH₂)_{w}H Formel (A)

   und

   (CH₂)_{y}CH₃ Formel (B)
mit x = 0-8, y = 0-8, w= 0-6,
wobei Z eine lineare oder verzweigte, substituierte oder unsubstituierte C₁-C₂₂ Alkylen-Kette ist, wobei die Verzweigungen auch einen cyclischen Ring, bevorzugt C₆-Cycloalkylen, ausbilden können, bevorzugt lineare oder verzweigte, substituierte oder unsubstituierte C₁-C₁₀ Alkylen-Kette, und
wobei mindestens zwei der Reste R¹, R², R³ und R⁴ unabhängig voneinander aus Formel (A) ausgewählt sind,
in einer Menge von 0,1 bis 30 phr, bevorzugt 0,5 - 25 phr, besonders bevorzugt 1 - 20 phr, ganz besonders bevorzugt 3 - 15 phr,
bevorzugt mit Z = (CH₂)_{z} mit z = 2-6, besonders bevorzugt z =3, und R¹ und R² sind gleich und ausgewählt aus Formel (A) mit x = 0-2, bevorzugt x=1, und mit w = 0-1, bevorzugt w = 1, und R³ und R⁴ sind gleich und ausgewählt aus Formel (B) mit y = 0-2, bevorzugt y = 0,
in schwefelvernetzbaren Kautschukmischungen, den daraus erhältlichen Vulkanisaten und den daraus erhältlichen Formkörpern, zur Behandlung, bevorzugt zur Verbesserung, des Zielkonflikts Rollwiderstand, Nassbremsen und Abrieb.

Meist bevorzugt ist die Verwendung des mindestens einen Prozesshilfsmittels der Formel (I), das *N,N*-Dimethyl-*N'*,*N'*-bis(2-hydroxypropyl)-1,3-diamin ist, in einer Menge von 0,1 bis 30 phr, bevorzugt 0,5 - 25 phr, besonders bevorzugt 1 - 20 phr, ganz besonders bevorzugt 3 - 15 phr, in schwefelvernetzbaren Kautschukmischungen, den daraus erhältlichen Vulkanisaten und den daraus erhältlichen Formkörpern, zur Behandlung, bevorzugt zur Verbesserung, des Zielkonflikts Rollwiderstand, Nassbremsen und Abrieb.

Die für die in der erfindungsgemäßen Kautschukmischung enthaltenen und gegebenenfalls enthaltenen Komponenten angeführten Beschreibungen und Vorzugsbereiche gelten für u.a. die offenbarten Verfahren und Verwendungen sowie die Vulkanisate und Formkörper analog.

Ebenso gelten die angeführten Beschreibungen und Vorzugsbereiche für u.a. die erfindungsgemäßen Kautschukmischungen, Vulkanisate, Formkörper, Verfahren und Verwendungen unabhängig davon, ob sie für vorgenannte im Plural (z.B. Kautschukmischungen) oder im Singular (z.B. Kautschukmischung) offenbart wurden.

Die Erfindung soll anhand der folgenden Beispiele erläutert werden, ohne diese jedoch darauf zu beschränken.

### Ausführungsbeispiele

**Tabelle 1: Liste der Einsatzstoffe, Abkürzungen und Hersteller**

| Handelsname | Erläuterung | Hersteller/Vertrieb |
|---|---|---|
| NIPOL^{®} BR1261 | Funktionalisierter Polybutadien Kautschuk (BR) | Zeon |
| SPRINTAN^{®} SLR 3402 | Funktionalisierter Styrol-butadien-Kautschuk (SBR) (TG -62 °C) | Trinseo |
| CORAX^{®} N 234 | Ruß | Orion Engineered Carbons GmbH |
| TDAE VIVATEC 500 | aromatisches Prozessöl | Hansen & Rosenthal (H&R GRUPPE) |
| Stearinsäure Pulver | Stearinsäure | Peter Greven GmbH & Co. KG |
| ANTILUX^{®} 654 | Wachs | Lanxess Deutschland GmbH |
| RHENOGRAN^{®} CBS-80 | Vulkanisationsbeschleuniger, N-Cyclohexyl-2-benzothiazol-sulfenamid (Polymer gebunden; 80% CBS enthaltend) | Lanxess Deutschland GmbH |
| ZINKOXID WS | Zinkoxid Weißsiegel | Grillo Zinkoxid GmbH |
| SCHWEFEL | Schwefel gemahlen | Kandelium Group GmbH |
| VULKANOX^{®} 4020/LG | Alterungsschutzmittel, *N*-1,3-Dimethylbutyl-*N*'-phenyl-*p*-phenylendiamin (6PPD) | Lanxess Deutschland GmbH |
| ULTRASIL^{®} 7000GR | Kieselsäure | Evonik Resource Efficiency GmbH |
| VULKANOX^{®} HS/LG | Alterungsschutzmittel, 2,2,4-trimethyl-1,2-dihydroquinoline, polymerisiert (TMQ) | Lanxess Deutschland GmbH |
| SI75^{®} | Silan, Bis-(triethoxysilylpropyl)-tetrasulfan | Evonik Resource Efficiency GmbH |
| RHENOGRAN^{®} DPG-80 | Vulkanisationsbeschleuniger, *N*,*N'*-Diphenylguanidin (Polymer gebunden; 80% DPG enthaltend) | Lanxess Deutschland GmbH |
| Escorez^{®} 5600 | Aromatisch modifizierter, cycloaliphatischer Kohlenwasserstoffharz | ExxonMobil |
| N,N-Dimethyl-N',N'-bis(2-hydroxypropyl)-1,3-diamin | Prozesshilfsmittel, Verbindung der Formel (I) | BLD Pharmatech LTD. |

| | | |
|---|---|---|
| Prozesshilfsmittel A: Mischung aus 70 Gew.-% Stearinsäure, 25 Gew.-% TMP, 5 Gew.-% Polyethylenglykol, bezogen auf das Gesamtgewicht des Prozesshilfsmittels A. | | |

### Herstellung der Kautschukvulkanisate

Es wurden die Kautschukmischungen der nicht erfindungsgemäßen Referenzmischungen (Beispiele 1 und 2) sowie die erfindungsgemäße Kautschukmischung (Beispiel 3) gemäß den in Tabelle 2 angegeben Rezepturen hergestellt. Beispiel 2 wurde in Anlehnung an WO2010136345A1 erstellt. Alle Kautschukmischungen der Beispiele enthalten Stearinsäure, wohingegen die Kautschukmischung des Beispiels 1 kein weiteres Prozesshilfsmittel enthält, die Kautschukmischung des Beispiels 2 eine größere Menge Stearinsäure enthält, verglichen mit Beispiel 1 bzw. 3, sowie zudem noch TMP, und die erfindungsgemäße Kautschukmischung des Beispiels 3 weiter das Prozesshilfsmittel der Formel (I), hier *N,N*-Dimethyl-*N*',*N*'-bis(2-hydroxypropyl)-1,3-diamin, enthält.

Die Herstellung der Kautschukmischungen erfolgte in folgenden Schritten:

### 1. Mischstufe:

▪ NIPOL^{®} BR1261 und SPRINTAN^{®} SLR 3402 werden in einem Innenmischer vorgelegt und ca. 30 Sekunden gemischt.
▪ Zugabe Hälfte ULTRASIL^{®} 7000GR und SI^{®} 75 mischen für ca. 60 Sekunden.
▪ Zugabe Hälfte ULTRASIL^{®} 7000GR, CORAX^{®}N 234, sowie Stearinsäure, Vulkanox^{®} 4020, Vulkanox^{®} HS, Antilux^{®} 654, Vivatec 500, Escorez 5600 oder RHENOGRAN^{®} DPG-80, Prozesshilfsmittel *N,N*-Dimethyl-*N*',*N*'-bis(2-hydroxypropyl)-1,3-diamin, mischen ca. 60 Sekunden, dann kehren. Mischen bis eine Temperatur von 160 °C erreicht ist, danach 4 min mischen bei 160 °C.

Nach Abschluss der ersten Mischstufe wird das Mischstück von einem nachgeschalteten Walzwerk aufgenommen und zu einer Platte, einem Streifen oder Pellets ausgeformt und für 24 Stunden bei Raumtemperatur gelagert. Verarbeitungstemperaturen liegen hierbei bei 70°C.

### 2. Mischstufe:

Danach erfolgte ein Mischen in einem Innenmischer bis eine Temperatur von 160°C erreicht ist (das sogenannte Nachzwicken).

Nach Abschluss der zweiten Mischstufe wird das Mischstück von einem nachgeschalteten Walzwerk aufgenommen und zu einer Platte, einem Streifen oder Pellets ausgeformt und für 24 Stunden bei Raumtemperatur gelagert.

### 3. Mischstufe:

Die Zugabe von Schwefel, Zinkoxid und des Vulkanisationsbeschleunigers Rhenogran^{®} CBS-80 erfolgte im Innenmischer für 2 min bei 100 °C.

Nach Abschluss der dritten Mischstufe wird das Mischstück mit einem Walzwerk zu einer Platte, einem Streifen oder Pellets ausgeformt und für 24 Stunden bei Raumtemperatur gelagert. Verarbeitungstemperaturen liegen hierbei bei 70°C.

Die erfindungsgemäße Kautschukmischung des Beispiels 3 zeigt keine Stippen auf der Oberfläche, sodass von einer guten Vermischung der verwendeten Additive ausgegangen wird.

**Tabelle 2: Bestandteile der erfindungsgemäßen Kautschukmischungen**

| Beispiel | **1** | **2** | **3 (erf.)** |
|---|---|---|---|
| Nipol^{®} BR 1261 | 40 | 40 | 40 |
| Sprintan^{®} SLR 3402 | 60 | 60 | 60 |
| CORAX^{®} N 234 | 5 | 5 | 5 |
| Ultrasil^{®} 7000 GR | 120 | 120 | 120 |
| Viva Tec 500 | 20 | 20 | 20 |
| Prozesshilfsmittel A | | 10 | |
| *N*,*N*-Dimethyl-*N*',*N*'-bis(2-hydroxypropyl)-1,3-diamin | | | 10 |
| Escorez^{®} 5600 | 30 | 30 | 30 |
| Antilux^{®} 654 | 2 | 2 | 2 |
| VULKANOX^{®} 4020/LG | 2 | 2 | 2 |
| VULKANOX^{®} HS/LG | 2 | 2 | 2 |
| SI75^{®} | 8,5 | 8,5 | 8,5 |
| Stearinsäure | 2 | 2 | 2 |
| Zinkoxid WS | 2,5 | 2,5 | 2,5 |
| Rhenogran^{®} CBS-80 | 2 | 2 | 2 |
| Rhenogran^{®} DPG-80 | 2,5 | 2,5 | 2,5 |
| Schwefel gemahlen | 2 | 2 | 2 |

| | | | |
|---|---|---|---|
| Mengenangaben in phr (Gewichtsteile pro 100 Teile Kautschuk) | | | |

### Technische Prüfung

Die bei 160°C aus den Kautschukmischungen der Beispiele 1-3 hergestellten Vulkanisate wurden den unten angegebenen technischen Prüfungen unterzogen. Die ermittelten Werte sind der Tabelle 3 zu entnehmen.

Für die Tests an Prüfkörpern wurden folgende Testverfahren angewandt:

### Mooney-Viskositätsmessung

Die Bestimmung erfolgte mittels Scherscheibenviskosimeter gemäß ASTM D 1646. Die Viskosität lässt sich aus der Kraft, die Kautschuke und Kautschukmischungen ihrer Verarbeitung entgegensetzen, direkt bestimmen. Beim Scherscheibenviskosimeter nach Mooney wird eine geriffelte Scheibe oben und unten mit Probensubstanz umschlossen und in einer beheizbaren Kammer mit etwa zwei Umdrehungen in der Minute bewegt. Die hierzu erforderliche Kraft wird als Drehmoment gemessen und entspricht der jeweiligen Viskosität. Die Probe wird in der Regel eine Minute lang auf 100°C vorgewärmt; die Messung dauert weitere 4 Minuten, wobei die Temperatur konstant gehalten wird. Die Viskosität wird zusammen mit den jeweiligen Prüfbedingungen angegeben, beispielsweise ML (1+4) 100°C (Mooney Viskosität, Rotorgröße L, Vorwärmzeit und Prüfzeit in Minuten, Prüftemperatur).

### Verwendetes Rheometer (Vulkameter) und An-/ Ausvulkanisationszeit

Der Vulkanisationsverlauf am MDR (moving die rheometer) und dessen analytischen Daten wurden an einem Monsanto-Rheometer MDR 2000 nach ASTM D5289-95 gemessen.

Als Ausvulkanisationszeit (t95) wird die Zeit bestimmt, bei der 95% des Kautschuks vernetzt sind. Die gewählte Temperatur betrug 160°C.

### Bestimmung Bruchdehnung, Bruchfestigkeit, Modul 300

Diese Messungen erfolgten nach DIN 53504 (Zugversuch, Stab S2, 5-fach Messung).

### Bestimmung der Shore-A-Härte

Messung der Shore Härte (Shore A) nach DIN 53505 bei 23 °C (3-fach Messung).

### Rückprallelastizität

Messung der Rückprallelastizität bei 23 °C und 60 °C (3-fach Messung) nach DIN 53512.

### Bestimmung des DIN Abriebs

Die einfachste Methode zur Bestimmung des abrasiven Verschleißes stellt der sogenannte DIN-Abrieb nach DIN ISO 4649 dar. Der Prüfkörper aus dem zu prüfenden Elastomer wird dabei unter einer konstanten Anpresskraft und mit konstanter Geschwindigkeit (40 min⁻¹) über einen festgelegten Reibweg (40 m) über einen auf einem rotierenden Zylinder befindlichen Prüfschmirgelbogen geführt. Anschließend wird der Materialverlust in mm³ bestimmt.

### Bestimmung des Verlustfaktors

Der Verlustfaktor tan δ wurde bei 0°C, 23 °C und 60°C und einer Messfrequenz von 10 Hz gemäß dynamischer Dämpfung DIN 53513 bestimmt.

### Bestimmung der Weiterreißfestigkeit

Die Weiterreißfestigkeit wurde gemäß DIN ISO 34-1:2015 (Graves, Bestimmung des Weiterreißwiderstandes - Teil 1: Streifen-, winkel- und bogenförmige Probekörper) bestimmt.

**Tabelle 3: Ergebnisse der technischen Prüfungen**

| Beispiel | **1** | **2** | **3 (erf.)** |
|---|---|---|---|
| Mooney-Viskosität, ML1+4 (1. Mischstufe) | 122 | 80 | 105 |
| Mooney-Viskosität, ML1+4 (3. Mischstufe) | 94 | 74 | 82 |
| Ausvulkanisationszeit T95 (min) | 45 | 21 | 28 |
| Modul 300 (MPa) | 7,2 | 10,3 | 11,3 |
| Bruchfestigkeit (MPa) | 13,3 | 17,7 | 19,9 |
| Bruchdehnung (%) | 446 | 453 | 443 |
| Härte (Shore A) | 55 | 63 | 63 |
| Rückprallelastizität (%) | 54 | 50 | 53 |
| Abrieb (mm³) | 139 | 118 | 90 |
| Weiterreißfestigkeit (dNm) | 21 | 54 | 73 |
| tan d (0°C) | 0,191 | 0,157 | 0,160 |
| tan d (23°C) | 0,153 | 0,140 | 0,148 |
| tan d (60°C) | 0,126 | 0,119 | 0,115 |

### Fazit

Beispiel 2 (nicht erfindungsgemäß) zeigt, dass durch Zugabe des Prozesshilfsmittel A, welches TMP sowie größere Mengen Stearinsäure enthält, die Verarbeitung im Vergleich zur Kautschukmischung des Beispiels 1 (nicht erfindungsgemäß), welche weniger Stearinsäure enthält, verbessert werden kann.

Durch Zugabe des Prozesshilfsmittels der Formel (I) in dem erfindungsgemäßen Beispiel 3 konnte überraschenderweise der Zielkonflikt Abrieb, Rollwiderstand und Naßbremsen im Vergleich zu Beispiel 2 verbessert werden. Die Verbesserung dieses Zielkonfliktes ist in dem erfindungsgemäßen Beispiel 3 erkennbar durch die erhöhten tan delta Werte bei 0°C und 23°C und den niedrigeren Wert bei 60 °C im Vergleich zu Beispiel 2, welches das TMP-haltige Prozesshilfsmittel A enthält. Gleichzeitig nimmt die Abriebbeständigkeit des erfindungsgemäßen Vulkanisats des Beispiels 3 zu, was sich anhand des reduzierten DIN Abrieb-Wertes erkennen lässt.

In der erfindungsgemäßen Kautschukmischung 3 konnte durch Zugabe des Prozesshilfsmittels der Formel (I), *N,N*-Dimethyl-*N*',*N*'-bis(2-hydroxypropyl)-1,3-diamin, die Mooney Viskosität deutlich reduziert werden im Vergleich zur Referenzmischung des Beispiels 1. Darüber hinaus wurde die Ausvulkanisationszeit (t95) verbessert.

## Patentansprüche

1. Kautschukmischung enthaltend
- mindestens einen Kautschuk,
- mindestens einen hydroxylgruppenhaltigen oxidischen Füllstoff,
- mindestens ein Verstärkungsadditiv aus der Reihe der schwefelhaltigen organischen Silane,
- mindestens einen Vernetzer aus der Reihe Schwefel und Schwefelspender, und
wobei weiter mindestens ein Prozesshilfsmittel der Formel (I) enthalten ist:
R¹R²NZNR³R⁴ Formel (I)
wobei R¹, R², R³ und R⁴ jeweils unabhängig voneinander ausgewählt sind aus
(CH₂)ₓCH(OH)(CH₂)_{w}H Formel (A)
und
(CH₂)_{y}CH₃ Formel (B)
mit x = 0-8, y = 0-8, w= 0-6,
wobei Z eine lineare oder verzweigte, substituierte oder unsubstituierte C₁-C₂₂ Alkylen-Kette ist, wobei die Verzweigungen auch einen cyclischen Ring, bevorzugt C₆-Cycloalkylen, ausbilden können, bevorzugt lineare oder verzweigte, substituierte oder unsubstituierte C₁-C₁₀ Alkylen-Kette, und
wobei mindestens zwei der Reste R¹, R², R³ und R⁴ unabhängig voneinander aus Formel (A) ausgewählt sind, und
wobei das mindestens eine Prozesshilfsmittel der Formel (I) bevorzugt in einer Menge von 0,1 - 30 phr, besonders bevorzugt von 0,5 - 25 phr, ganz besonders bevorzugt von 1 - 20 phr, meist bevorzugt von 3 - 15 phr, in der Kautschukmischung enthalten ist.

2. Kautschukmischung nach Anspruch 1, **dadurch gekennzeichnet, dass** der mindestens eine Kautschuk ausgewählt ist aus der Gruppe bestehend aus Naturkautschuk und Synthesekautschuken, bevorzugt mindestens ein funktionalisierter Synthesekautschuk ist, besonders bevorzugt mindestens ein funktionalisierter Synthesekautschuk ausgewählt aus der Gruppe bestehend aus funktionalisiertem SBR-, funktionalisiertem BR- und funktionalisiertem IR-Kautschuk, ganz besonders bevorzugt aus funktionalisiertem SBR- und funktionalisiertem BR-Kautschuk.

3. Kautschukmischung gemäß einem der Ansprüche 1 oder 2, **dadurch gekennzeichnet, dass** der mindestens eine hydroxylgruppenhaltige oxidische Füllstoff ausgewählt ist aus der Gruppe bestehend aus Kieselsäuren, synthetischen Silikaten und natürlichen Silikaten, und in einer Menge von 0,1 bis 250 phr, bevorzugt 20 bis 200 phr, besonders bevorzugt von 25 bis 180 phr, ganz besonders bevorzugt 30 - 160 phr in der Kautschukmischung enthalten ist.

4. Kautschukmischung gemäß einem der Ansprüche 1-3, **dadurch gekennzeichnet, dass** Z eine lineare, substituierte oder unsubstituierte C₁-C₂₂ Alkylen-Kette, bevorzugt lineare, substituierte oder unsubstituierte C₁-C₁₀ Alkylen-Kette, besonders bevorzugt lineare, substituierte oder unsubstituierte C₂-C₆ Alkylen-Kette, ganz besonders bevorzugt lineare, substituierte oder unsubstituierte C₃ Alkylen-Kette ist

5. Kautschukmischung gemäß einem der Ansprüche 1-4, **dadurch gekennzeichnet, dass** R¹ und R² unabhängig voneinander ausgewählt sind aus Formel (A), bevorzugt dass R¹ und R² gleich sind und ausgewählt sind aus Formel (A).

6. Kautschukmischung gemäß einem der Ansprüche 1-5, **dadurch gekennzeichnet, dass** R³ und R⁴ unabhängig voneinander ausgewählt sind aus Formel (B), bevorzugt dass R³ und R⁴ gleich sind und ausgewählt sind aus Formel (B).

7. Kautschukmischung gemäß einem der Ansprüche 1-6, **dadurch gekennzeichnet, dass** Z = (CH₂)_{z} ist mit z = 2-6, bevorzugt z =3, und R¹ und R² gleich sind und ausgewählt sind aus Formel (A) mit x = 0-2, bevorzugt x=1, und mit w = 0-1, bevorzugt w = 1, und R³ und R⁴ gleich sind und ausgewählt sind aus Formel (B) mit y = 0-2, bevorzugt y = 0.

8. Kautschukmischung gemäß einem der Ansprüche 1-7, **dadurch gekennzeichnet, dass** das mindestens eine Prozesshilfsmittel der Formel (I) mindestens 20 Gew.-%, bevorzugt mindestens 40 Gew.-%, besonders bevorzugt mindestens 70 Gew.-%, ganz besonders bevorzugt mindestens 80 Gew.-% der Prozesshilfsmittel, die in der erfindungsgemäßen Kautschukmischung enthalten sind können, darstellt, wobei die Gew.-% bezogen sind auf die Gesamtmenge der Prozesshilfsmittel.

9. Kautschukmischung gemäß einem der Ansprüche 1-8, **dadurch gekennzeichnet, dass** sie mindestens einen Vulkanisationsbeschleuniger enthält, bevorzugt in einer Menge von 0,1 bis 10 phr, besonders bevorzugt 0,2 bis 5 phr

10. Kautschukmischung gemäß einem der Ansprüche 1-9, **dadurch gekennzeichnet, dass** die Kautschukmischung
- 50 bis 100 phr mindestens eines funktionalisierten Synthesekautschuks, bevorzugt 70 - 100 phr, bevorzugt eines funktionalisierten BR-Kautschuks und/oder funktionalisierten SBR-Kautschuks,
- 0 bis 50 phr mindestens eines Naturkautschuks und/ oder unfunktionalisierten Synthesekautschuks, bevorzugt 0 bis 30 phr,
- 20 bis 200 phr mindestens eines hydroxylgruppenhaltigen oxidischen Füllstoffs,
- 0,5 bis 15 phr mindestens eines Verstärkungsadditives aus der Gruppe der schwefelhaltigen organischen Silane, bevorzugt bifunktionelle schwefelhaltige organische Silane, die am Siliciumatom mindestens eine Alkoxy-, Cycloalkoxy-, oder Phenoxygruppe aufweisen und als andere Funktionalität eine Gruppe ausgewählt aus -SCN, -SH oder -Sx- mit x = 2 bis 8, besonders bevorzugt Alkoxysilylgruppen-haltige schwefelhaltige Silane und ganz besonders bevorzugt Trialkoxysilylgruppen-haltige schwefelhaltige organische Silane,
- 0,1 bis 120 phr mindestens eines Ruß, bevorzugt 0,1 bis 100 phr,
- 0,5 bis 10 phr mindestens eines Vernetzers aus der Reihe Schwefelspender und Schwefel,
- 0,1 bis 10 phr Zinkoxid,
- 0,1 bis 10 phr mindestens eines Vulkanisationsbeschleunigers, bevorzugt ausgewählt aus der Gruppe der Mercapto-benzthiazole, Thiocarbamate, Dithiocarbamate, Thiurame, Thiazole, Sulfenamide, Thiazolsulfenamide, Xanthogenate, bi- oder polycyclische Amine, Thiophosphate, Dithiophosphate, Caprolactame, Thioharnstoffderivate, Guanidine, cyclischen Disulfane sowie Amine, insbesondere Zink-diamindiisocyanat, Hexamethylentetramin, 1,3-Bis(citraconimidomethyl)benzol, und besonders bevorzugt aus der Gruppe der Sulfenamide, ganz besonders bevorzugt N-Cyclohexylbenzothiazolsulfenamid (CAS-Nr.: 95-33-0), und
- 0,1 bis 30 phr mindestens eines Prozesshilfsmittels der Formel (I), bevorzugt 0,5 - 25 phr, besonders bevorzugt 1 - 20 phr, ganz besonders bevorzugt 3 - 15 phr,
enthält.

11. Verfahren zur Herstellung der erfindungsgemäßen Kautschukmischungen nach einem der Ansprüche 1-10, **dadurch gekennzeichnet, dass** in einem Mischprozess die jeweiligen Komponenten gemischt werden.

12. Verfahren gemäß Anspruch 11, **dadurch gekennzeichnet, dass** in dem Verfahren zur Herstellung der Kautschukmischung
- zunächst der mindestens eine Kautschuk, der mindestens eine hydroxylgruppenhaltige oxidische Füllstoff, das mindestens eine Verstärkungsadditiv aus der Gruppe der schwefelhaltigen organischen Silane, gegebenenfalls der mindestens eine Vulkanisationsbeschleuniger, bevorzugt der Guanidin-haltige Vulkanisationsbeschleuniger, und das mindestens eine Prozesshilfsmittel der Formel (I) sowie gegebenenfalls weitere Kautschukhilfsmittel und gegebenenfalls weitere Prozesshilfsmittel gemischt werden, bevorzugt bei 130 bis 180°C, und
- im Anschluss der mindestens eine Vernetzer aus der Reihe Schwefel und Schwefelspender sowie gegebenenfalls der mindestens eine weitere Vulkanisationsbeschleuniger und gegebenenfalls weitere Kautschukhilfsmittel zu der erhaltenen Kautschukmischung gegeben werden, bevorzugt bei 50 - 130°C.

13. Vulkanisate, erhältlich durch Vulkanisation von Kautschukmischungen gemäß einem der Ansprüche 1 bis 10.

14. Formkörper, bevorzugt technische Gummiartikel und Reifen, enthaltend ein oder mehrere Kautschukvulkanisate gemäß Anspruch 13.

15. Verwendung des mindestens eines Prozesshilfsmittels der Formel (I)
R¹R²NZNR³R⁴ Formel (I)
wobei R¹, R², R³ und R⁴ jeweils unabhängig voneinander ausgewählt sind aus
(CH₂)ₓCH(OH)(CH₂)_{w}H Formel (A)
und
(CH₂)_{y}CH₃ Formel (B)
mit x = 0-8, y = 0-8, w= 0-6,
wobei Z eine lineare oder verzweigte, substituierte oder unsubstituierte C₁-C₂₂ Alkylen-Kette ist, wobei die Verzweigungen auch einen cyclischen Ring, bevorzugt C₆-Cycloalkylen, ausbilden können, bevorzugt lineare oder verzweigte, substituierte oder unsubstituierte C₁-C₁₀ Alkylen-Kette, und
wobei mindestens zwei der Reste R¹, R², R³ und R⁴ unabhängig voneinander aus Formel (A) ausgewählt sind,
in einer Menge von 0,1 bis 30 phr, bevorzugt 0,5 - 25 phr, besonders bevorzugt 1 - 20 phr, ganz besonders bevorzugt 3 - 15 phr,
bevorzugt mit Z = (CH₂)_{z} mit z = 2-6, besonders bevorzugt z =3, und R¹ und R² gleich sind und ausgewählt sind aus Formel (A) mit x = 0-2, bevorzugt x=1, und mit w = 0-1, bevorzugt w = 1, und R³ und R⁴ gleich sind und ausgewählt sind aus Formel (B) mit y = 0-2, bevorzugt y = 0, meist bevorzugt Verwendung des mindestens einen Prozesshilfsmittels der Formel (I), das *N,N*-Dimethyl-*N',N*'-bis(2-hydroxypropyl)-1,3-diamin ist,
in schwefelvernetzbaren Kautschukmischungen, den daraus erhältlichen Vulkanisaten und den daraus erhältlichen Formkörpern, zur Behandlung, bevorzugt zur Verbesserung, des Zielkonflikts Rollwiderstand, Nassbremsen und Abrieb.

## Claims

1. Rubber mixture containing
- at least one rubber,
- at least one hydroxyl-containing oxidic filler,
- at least one reinforcing additive from the group of sulfur-containing organic silanes,
- at least one crosslinker from the group of sulfur and sulfur donors, and
wherein said mixture further contains at least one processing aid of formula (I):
R¹R²NZNR³R⁴ formula (I)
wherein R¹, R², R³ and R⁴ are each independently selected from
(CH₂)ₓCH(OH)(CH₂)_{w}H formula (A)
and
(CH₂)_{y}CH₃ formula (B)
where x = 0-8, y = 0-8, w= 0-6,
wherein Z is a linear or branched, substituted or unsubstituted C₁-C₂₂-alkylene chain, wherein the branchings may also form a cyclic ring, preferably C₆-cycloalkylene, preferably linear or branched, substituted or unsubstituted C₁-C₁₀-alkylene chain, and
wherein at least two of the radicals R¹, R², R³ and R⁴ are independently selected from formula (A), and
wherein the at least one processing aid of formula (I) is preferably present in the rubber mixture in an amount of 0.1 - 30 phr, particularly preferably of 0.5 - 25 phr, very particularly preferably of 1 - 20 phr, most preferably of 3 - 15 phr.

2. Rubber mixture according to Claim 1, **characterized in that** the at least one rubber is selected from the group consisting of natural rubber and synthetic rubbers, is preferably at least one functionalized synthetic rubber and is particularly preferably at least one functionalized synthetic rubber selected from the group consisting of functionalized SBR, functionalized BR and functionalized IR rubber, very particularly preferably from functionalized SBR and functionalized BR rubber.

3. Rubber mixture according to either of Claims 1 or 2, **characterized in that** the at least one hydroxyl-containing oxidic filler is selected from the group consisting of silicas, synthetic silicates and natural silicates and is present in the rubber mixture in an amount of 0.1 to 250 phr, preferably 20 to 200 phr, particularly preferably of 25 to 180 phr, very particularly preferably 30 - 160 phr.

4. Rubber mixture according to any of Claims 1-3, **characterized in that** Z is a linear, substituted or unsubstituted C₁-C₂₂-alkylene chain, preferably linear, substituted or unsubstituted C₁-C₁₀-alkylene chain, particularly preferably linear, substituted or unsubstituted C₂-C₆-alkylene chain, very particularly preferably linear, substituted or unsubstituted C₃-alkylene chain

5. Rubber mixture according to any of Claims 1-4, **characterized in that** R¹ and R² are independently selected from formula (A), preferably that R¹ and R² are identical and are selected from formula (A).

6. Rubber mixture according to any of Claims 1-5, **characterized in that** R³ and R⁴ are independently selected from formula (B), preferably that R³ and R⁴ are identical and are selected from formula (B).

7. Rubber mixture according to any of Claims 1-6, **characterized in that** Z = (CH₂)_{z} where z = 2-6, preferably z = 3, and R¹ and R² are identical and are selected from formula (A) where x = 0-2, preferably x = 1, and where w = 0-1, preferably w = 1, and R³ and R⁴ are identical and are selected from formula (B) where y = 0-2, preferably y = 0.

8. Rubber mixture according to any of Claims 1-7, **characterized in that** the at least one processing aid of formula (I) represents at least 20% by weight, preferably at least 40% by weight, particularly preferably at least 70% by weight, very particularly preferably at least 80% by weight, of the processing aids that may be present in the rubber mixture according to the invention, wherein the % by weight values are based on the total amount of processing aids.

9. Rubber mixture according to any of Claims 1-8, **characterized in that** it contains at least one vulcanization accelerator, preferably in an amount of 0.1 to 10 phr, particularly preferably 0.2 to 5 phr.

10. Rubber mixture according to any of Claims 1-9, **characterized in that** the rubber mixture contains
- 50 to 100 phr of at least one functionalized synthetic rubber, preferably 70 - 100 phr, preferably of a functionalized BR rubber and/or functionalized SBR rubber,
- 0 to 50 phr of at least one natural rubber and/or non-functionalized synthetic rubber, preferably 0 to 30 phr,
- 20 to 200 phr of at least one hydroxyl-containing oxidic filler,
- 0.5 to 15 phr of at least one reinforcing additive from the group of sulfur-containing organic silanes, preferably difunctional sulfur-containing organic silanes which comprise at least one alkoxy, cycloalkoxy or phenoxy group at the silicon atom and a group selected from -SCN, -SH or -Sx- where x = 2 to 8 as another functionality, particularly preferably alkoxysilyl-containing sulfur-containing silanes and very particularly preferably trialkoxysilyl-containing sulfur-containing organic silanes,
- 0.1 to 120 phr of at least one carbon black, preferably 0.1 to 100 phr,
- 0.5 to 10 phr of at least one crosslinker from the group of
sulfur donors and sulfur,
- 0.1 to 10 phr of zinc oxide,
- 0.1 to 10 phr of at least one vulcanization accelerator, preferably selected from the group of mercaptobenzothiazoles, thiocarbamates, dithiocarbamates, thiurams, thiazoles, sulfenamides, thiazolesulfenamides, xanthates, bi- or polycyclic amines, thiophosphates, dithiophosphates, caprolactams, thiourea derivatives, guanidines, cyclic disulfanes and amines, in particular zinc diaminediisocyanate, hexamethylenetetramine, 1,3-bis(citraconimidomethyl)benzene, and particularly preferably from the group of sulfenamides, very particularly preferably N-cyclohexylbenzothiazolesulfenamide (CAS No.: 95-33-0), and
- 0.1 to 30 phr of at least one processing aid of formula (I), preferably 0.5 - 25 phr, particularly preferably 1 - 20 phr, very particularly preferably 3 - 15 phr.

11. Process for producing the inventive rubber mixtures according to any of Claims 1-10, **characterized in that** the respective components are mixed in a mixing process.

12. Process according to Claim 11, **characterized in that** in the process for producing the rubber mixture
- initially the at least one rubber, the at least one hydroxyl-containing oxidic filler, the at least one reinforcing additive from the group of sulfur-containing organic silanes, optionally the at least one vulcanization accelerator, preferably the guanidine-containing vulcanization accelerator, and the at least one processing aid of formula (I) and optionally further rubber auxiliaries and optionally further processing aids are mixed, preferably at 130°C to 180°C, and
- subsequently the at least one crosslinker from the group of sulfur and sulfur donors and optionally the at least one further vulcanization accelerator and optionally further rubber auxiliaries are added to the obtained rubber mixture, preferably at 50 - 130°C.

13. Vulcanizates obtainable by vulcanization of rubber mixtures according to any of Claims 1 to 10.

14. Shaped articles, preferably technical rubber articles and tyres, containing one or more rubber vulcanizates according to Claim 13.

15. Use of the at least one processing aid of formula (I)
R¹R²NZNR³R⁴ formula (I)
wherein R¹, R², R³ and R⁴ are each independently selected from
(CH₂)ₓCH(OH) (CH₂)_{w}H formula (A)
and
(CH₂)_{y}CH₃ formula (B)
where x = 0-8, y = 0-8, w= 0-6,
wherein Z is a linear or branched, substituted or unsubstituted C₁-C₂₂-alkylene chain, wherein the branchings may also form a cyclic ring, preferably C₆-cycloalkylene, preferably linear or branched, substituted or unsubstituted C₁-C₁₀-alkylene chain, and wherein at least two of the radicals R¹, R², R³ and R⁴ are independently selected from formula (A),
in an amount of 0.1 to 30 phr, preferably 0.5 - 25 phr, particularly preferably 1 - 20 phr, very particularly preferably 3 - 15 phr,
preferably where Z = (CH₂)_{z} where z = 2-6, particularly preferably z = 3, and R¹ and R² are identical and are selected from formula (A) where x = 0-2, preferably x = 1, and where w = 0-1, preferably w = 1, and R³ and R⁴ are identical and are selected from formula (B) where y = 0-2, preferably y = 0, most preferably use of the at least one processing aid of formula (I) that is N,N-dimethyl-N',N'-bis(2-hydroxypropyl)-1,3-diamine,
in sulfur-crosslinkable rubber mixtures, the vulcanizates obtainable therefrom and the shaped articles obtainable therefrom, for modifying, preferably for improving, the trade-off between rolling resistance, wet braking and abrasion.

## Revendications

1. Mélange de caoutchouc comprenant
- au moins un caoutchouc,
- au moins une charge oxydique contenant des groupes hydroxyle,
- au moins un additif de renforcement du groupe des silanes organiques contenant du soufre,
- au moins un agent de réticulation du groupe du soufre et des donneurs de soufre, et
où en outre au moins un auxiliaire de processus de la formule (I) est contenu :
R¹R²NZNR³R⁴ Formule (I)
où R¹, R², R³ et R⁴ sont choisis chacun indépendamment les uns des autres parmi
(CH₂)ₓCH(OH)(CH₂)_{w}H Formule (A)
et
(CH₂)_{y}CH₃ Formule (B)
où x = 0-8, y = 0-8, w = 0-6,
où Z est une chaîne alkylène en C₁-C₂₂ linéaire ou ramifiée, substituée ou non substituée, les ramifications pouvant également former un cycle, de préférence un cycloalkylène en C₆, de préférence une chaîne alkylène en C₁-C₁₀ linéaire ou ramifiée, substituée ou non substituée, et
où au moins deux des radicaux R¹, R², R³ et R⁴ sont choisis indépendamment les uns des autres parmi la formule (A), et
où l'au moins un auxiliaire de processus de la formule (I) est de préférence contenu dans la composition de caoutchouc en une quantité de 0,1 - 30 phr, de manière particulièrement préférée de 0,5 - 25 phr, de manière tout particulièrement préférée de 1 - 20 phr, de manière la plus préférée de 3 - 15 phr.

2. Mélange de caoutchouc selon la revendication 1, **caractérisé en ce que** l'au moins un caoutchouc est choisi dans le groupe constitué par le caoutchouc naturel et les caoutchoucs synthétiques, de préférence est au moins un caoutchouc synthétique fonctionnalisé, de manière particulièrement préférée au moins un caoutchouc synthétique fonctionnalisé choisi dans le groupe constitué par le caoutchouc SBR fonctionnalisé, le caoutchouc BR fonctionnalisé et le caoutchouc IR fonctionnalisé, de manière tout particulièrement préférée le caoutchouc SBR fonctionnalisé et le caoutchouc BR fonctionnalisé.

3. Mélange de caoutchouc selon l'une des revendications 1 ou 2, **caractérisé en ce que** l'au moins une charge oxydique contenant des groupes hydroxyle est choisie dans le groupe constitué par les acides siliciques, les silicates synthétiques et les silicates naturels, et est contenue dans la composition de caoutchouc en une quantité de 0,1 à 250 phr, de préférence 20 à 200 phr, de manière particulièrement préférée de 25 à 180 phr, de manière tout particulièrement préférée de 30 à 160 phr.

4. Mélange de caoutchouc selon l'une des revendications 1 à 3, **caractérisé en ce que** Z est une chaîne alkylène en C₁-C₂₂ linéaire, substituée ou non substituée, de préférence une chaîne alkylène en C₁-C₁₀ linéaire, substituée ou non substituée, de manière particulièrement préférée une chaîne alkylène en C₂-C₆ linéaire, substituée ou non substituée, de manière tout particulièrement préférée une chaîne alkylène en C₃ linéaire, substituée ou non substituée.

5. Mélange de caoutchouc selon l'une des revendications 1 à 4, **caractérisé en ce que** R¹ et R² sont choisis indépendamment l'un de l'autre parmi la formule (A), de préférence **en ce que** R¹ et R² sont identiques et sont choisis parmi la formule (A).

6. Mélange de caoutchouc selon l'une des revendications 1 à 5, **caractérisé en ce que** R³ et R⁴ sont choisis indépendamment l'un de l'autre parmi la formule (B), de préférence **en ce que** R³ et R⁴ sont identiques et sont choisis parmi la formule (B).

7. Mélange de caoutchouc selon l'une des revendications 1 à 6, **caractérisé en ce que** Z = (CH₂)_{z} avec z = 2-6, de préférence z = 3, et R¹ et R² sont identiques et sont choisis parmi la formule (A) avec x = 0-2, de préférence x = 1, et avec w = 0-1, de préférence w = 1, et R³ et R⁴ sont identiques et sont choisis parmi la formule (B) avec y = 0-2, de préférence y = 0.

8. Mélange de caoutchouc selon l'une des revendications 1 à 7, **caractérisé en ce que** l'au moins un auxiliaire de processus de la formule (I) représente au moins 20 % en poids, de préférence au moins 40 % en poids, de manière particulièrement préférée au moins 70 % en poids, de manière tout particulièrement préférée au moins 80 % en poids des auxiliaires de processus pouvant être contenus dans la composition de caoutchouc selon l'invention, les % en poids étant rapportés à la quantité totale des auxiliaires de processus.

9. Mélange de caoutchouc selon l'une des revendications 1 à 8, **caractérisé en ce qu'**il contient au moins un accélérateur de vulcanisation, de préférence en une quantité de 0,1 à 10 phr, de manière particulièrement préférée de 0,2 à 5 phr.

10. Mélange de caoutchouc selon l'une des revendications 1 à 9, **caractérisé en ce que** le mélange de caoutchouc contient
- 50 à 100 phr d'au moins un caoutchouc synthétique fonctionnalisé, de préférence 70 à 100 phr, de préférence d'un caoutchouc BR fonctionnalisé et/ou d'un caoutchouc SBR fonctionnalisé,
- 0 à 50 phr d'au moins un caoutchouc naturel et/ou un caoutchouc synthétique non fonctionnalisé, de préférence 0 à 30 phr,
- 20 à 200 phr d'au moins une charge oxydique contenant des groupes hydroxyle,
- 0,5 à 15 phr d'au moins un additif de renforcement du groupe des silanes organiques contenant du soufre, de préférence des silanes organiques contenant du soufre bifonctionnels, qui présentent sur l'atome de silicium au moins un groupe alkoxy, cycloalkoxy ou phénoxy et, comme autre fonctionnalité, un groupe choisi parmi -SCN,
- SH ou -Sx- avec x = 2 à 8, de manière particulièrement préférée des silanes contenant du soufre comportant des groupes alkoxysilyle et de manière tout particulièrement préférée des silanes organiques contenant du soufre comportant des groupes trialkoxysilyle,
- 0,1 à 120 phr d'au moins un noir de carbone, de préférence 0,1 à 100 phr,
- 0,5 à 10 phr d'au moins un agent de réticulation du groupe
des donneurs de soufre et du soufre,
- 0,1 à 10 phr d'oxyde de zinc,
- 0,1 à 10 phr d'au moins un accélérateur de vulcanisation, choisi de préférence dans le groupe des mercaptobenzthiazoles, thiocarbamates, dithiocarbamates, thiurames, thiazoles, sulfénamides, thiazolsulfénamides, xanthogénates, amines bi- ou polycycliques, thiophosphates, dithiophosphates, caprolactames, dérivés de la thiourée, guanidines, disulfanes cycliques et amines, en particulier le diisocyanate de diamine de zinc, l'hexaméthylènetétramine, le 1,3-bis(citraconimidométhyl)benzène, et de manière particulièrement préférée du groupe des sulfénamides, de manière tout particulièrement préférée le N-cyclohexylbenzothiazole sulfénamide (no CAS : 95-33-0), et
- 0,1 à 30 phr d'au moins un auxiliaire de processus de formule (I), de préférence 0,5 à 25 phr, de manière particulièrement préférée 1 à 20 phr, de manière tout particulièrement préférée 3 à 15 phr.

11. Procédé de préparation des mélanges de caoutchouc selon l'invention selon l'une quelconque des revendications 1 à 10, **caractérisé en ce que** les composants respectifs sont mélangés dans un processus de mélange.

12. Procédé selon la revendication 11, **caractérisé en ce que** dans le procédé de préparation du mélange de caoutchouc
- d'abord l'au moins un caoutchouc, l'au moins une charge oxydique contenant des groupes hydroxyle, l'au moins un additif de renforcement du groupe des silanes organiques contenant du soufre, le cas échéant l'au moins un accélérateur de vulcanisation, de préférence l'accélérateur de vulcanisation contenant de la guanidine, et l'au moins un auxiliaire de processus de la formule (I), ainsi que, le cas échéant, d'autres auxiliaires de caoutchouc et, le cas échéant, d'autres auxiliaires de processus sont mélangés, de préférence à 130 à 180 °C, et
- ensuite l'au moins un agent de réticulation du groupe du soufre et des donneurs de soufre ainsi que, le cas échéant, l'au moins un autre accélérateur de vulcanisation et, le cas échéant, d'autres auxiliaires de caoutchouc sont ajoutés au mélange de caoutchouc obtenu, de préférence à 50 - 130 °C.

13. Vulcanisats, pouvant être obtenus par vulcanisation de mélanges de caoutchouc selon l'une des revendications 1 à 10.

14. Corps moulés, de préférence articles techniques en caoutchouc et pneumatiques, contenant un ou plusieurs vulcanisats de caoutchouc selon la revendication 13.

15. Utilisation de l'au moins un auxiliaire de processus de formule (I)
R¹R²NZNR³R⁴ Formule (I)
où R¹, R², R³ et R⁴ sont choisis chacun indépendamment les uns des autres parmi
(CH₂)ₓCH(OH) (CH₂)_{w}H Formule (A)
et
(CH₂)_{y}CH₃ Formule (B)
où x = 0-8, y = 0-8, w = 0-6,
où Z est une chaîne alkylène en C₁-C₂₂ linéaire ou ramifiée, substituée ou non substituée, les ramifications pouvant également former un cycle, de préférence un cycloalkylène en C₆, de préférence une chaîne alkylène en C₁-C₁₀ linéaire ou ramifiée, substituée ou non substituée, et
où au moins deux des radicaux R¹, R², R³ et R⁴ sont choisis indépendamment les uns des autres parmi la formule (A), en une quantité de 0,1 à 30 phr, de préférence de 0,5 à 25 phr, de manière particulièrement préférée de 1 à 20 phr, de manière tout particulièrement préférée de 3 à 15 phr,
de préférence avec Z = (CH₂)_{z} avec z = 2-6, de manière particulièrement préférée z = 3, et R¹ et R² sont identiques et sont choisis parmi la formule (A) avec x = 0-2, de préférence x = 1, et avec w = 0-1, de préférence w = 1, et R³ et R⁴ sont identiques et sont choisis parmi la formule (B) avec y = 0-2, de préférence y = 0, de manière la plus préférée utilisation de l'au moins un auxiliaire de processus de formule (I), qui est la N,N-diméthyl-N',N'-bis(2-hydroxypropyl)-1,3-diamine,
dans des mélanges de caoutchouc réticulables au soufre, les vulcanisats pouvant être obtenus à partir de ceux-ci et les corps moulés pouvant être obtenus à partir de ceux-ci, pour le traitement, de préférence pour l'amélioration, des conflits de buts de résistance au roulement, de freinage humide et d'abrasion.
